# EUROPEAN PATENT SPECIFICATION

(11) **EP 2 502 376 B1**
(45) Date of publication and mention of the grant of the patent: **31.01.2018**
(21) Application number: 10787947.0
(22) Date of filing: 19.11.2010
(51) Int. Cl.: H04L 1/16, H04L 1/18, H04L 1/22

(54) **METHOD AND APPARATUS FOR SEAMLESS TRANSITIONS BETWEEN RADIO LINKS USING DIFFERENT FREQUENCY BANDS FOR DATA TRANSMISSION**
VERFAHREN UND VORRICHTUNG FÜR DEN NAHTLOSEN ÜBERGANG ZWISCHEN FUNKVERBINDUNGEN MIT VERSCHIEDENEN FREQUENZBÄNDERN ZUR DATENÜBERTRAGUNG
PROCÉDÉ ET APPAREIL ASSURANT DES TRANSITIONS SANS HEURTS ENTRE DES LIAISONS HERTZIENNES UTILISANT DES BANDES DE FRÉQUENCE DIFFÉRENT POUR LA TRANSMISSION DE DONNÉES

(30) Priority: 20.11.2009 US 263265 P; 03.02.2010 US 300936 P; 18.11.2010 US 949763
(43) Date of publication of application: 26.09.2012
(73) Proprietor: Qualcomm Incorporated, San Diego, CA 92121 (US)
(72) Inventor: ABRAHAM, Santosh, Paul, San Diego, California 92121 (US); TAGHAVI NASRABADI, Mohammad, Hossein, San Diego, California 92121 (US); JAIN, Avinash, San Diego, California 92121 (US); SAMPATH, Hemanth, San Diego, California 92121 (US)
(74) Representative: Emde, Eric
(86) International application number: PCT/US2010/057521
(87) International publication number: WO 2011/063299

(56) References cited:
- EP-A1- 1 770 910
- WO-A2-02/054671
- GB-A- 2 327 019
- US-A1- 2003 125 056
- US-A1- 2006 171 349

## Description

### BACKGROUND

### I. Field

The following description relates generally to communication systems, and more particularly to a method and apparatus for seamless transitions of data transfer between radio links.

### II. Background

In order to address the issue of increasing bandwidth requirements that are demanded for wireless communications systems, different schemes are being developed to allow multiple user terminals to communicate with a single access point by sharing the channel resources while achieving high data throughputs. Multiple Input or Multiple Output (MIMO) technology represents one such approach that has recently emerged as a popular technique for the next generation communication systems. MIMO technology has been adopted in several emerging wireless communications standards such as the Institute of Electrical Engineers (IEEE) 802.11 standard. IEEE 802.11 denotes a set of Wireless Local Area Network (WLAN) air interface standards developed by the IEEE 802.11 committee for short-range communications (e.g., tens of meters to a few hundred meters).

In wireless communications systems, medium access (MAC) protocols are designed to operate to exploit several dimensions of freedom offered by the physical (PHY) layer air link medium. The most commonly exploited dimensions of freedom are time and frequency. For example, in the IEEE 802.11 MAC protocol, the "time" dimension of freedom is exploited through the CSMA (Carrier Sense Multiple Access). The CSMA protocol attempts to ensure that no more than one transmission occurs during a period of potential high interference. Similarly, the "frequency" dimension of freedom can be exploited by using different frequency channels.

Recent developments have led to space as a dimension being a viable option to be used to increase, or at least more efficiently use, existing capacity. Spatial Division Multiple Access (SDMA) can be used for improving utilization of the air link by scheduling multiple terminals for simultaneous transmission and reception. Data is sent to each of the terminals using spatial streams. For example, with SDMA, a transmitter forms orthogonal streams to individual receivers. Such orthogonal streams can be formed because the transmitter has several antennas and the transmit/receive channel consists of several paths. Receivers may also have one or more antennas (MIMO, SIMO). For this example, it is assumed that the transmitter is an access point (AP) and the receivers are stations (STAs). The streams are formed such that a stream targeted at STA-B, for example, is seen as low power interference at STA-C, STA-D, ..., etc., and this will not cause significant interference and most likely be ignored.

In certain IEEE 802.11 devices being implemented, radio links of different rates may be used. By way of example, a device may use 2.4/5GHz as well as 60GHz radio links. Such devices may utilize the higher, 60GHz radio link for short distance, high throughput file transfers. However, 60 GHZ links may lose connectivity rapidly due to deeper fades and tight directionality requirements of the 60GHz band. Thus, applications such as streaming video and data file transfers may experience longer delays and poor user experience when these applications are required to re-establish the connection.

Consequently, it would be desirable to address one or more of the deficiencies described above. US 2006/171349 A1 discloses macro diversity in HSUPA, in which base station 1 receives data blocks from a MS. If some of the blocks can not be successfully decoded, it requests additional transmission from a neighboring base station, which is also in the active set of the MS.

### SUMMARY

The following presents a simplified summary of one or more aspects of a method and apparatus for method and apparatus for seamless transitions of data transfer between radio links in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

According to various aspects, the subject innovation relates to apparatus and methods that provide wireless communications, where a method for wireless communications includes generating an index for a plurality of packets for use in a first radio link for transmission to an apparatus; wherein the apparatus is adapted to operate under dual speed links, namely a higher-speed and the lower-speed radio link; transmitting the plurality of packets using a second radio link to the apparatus; determining transmission state information indicating whether each packet in the plurality of packets have been received by the apparatus; and transmitting additional packets based on the index and the transmission state information.

In yet another aspect, an apparatus for wireless communications is provided that includes means for generating an index for a plurality of packets for use in a first radio link for transmission to an apparatus; wherein the apparatus is adapted to operate under dual speed links, namely a higher-speed and the lower-speed radio link; means for transmitting the plurality of packets using a second radio link to the apparatus; means for determining transmission state information indicating whether each packet in the plurality of packets have been received by the apparatus; and means for transmitting additional packets based on the index and the transmission state information.

In yet another aspect, a computer-program product for wireless communications is provided that includes a machine-readable medium including instructions executable to carry out the method as defined above.

To the accomplishment of the foregoing and related ends, the one or more aspects comprise the features hereinafter fully described and particularly pointed out in the claims. The following description and the annexed drawings set forth in detail certain illustrative aspects of the one or more aspects. These aspects are indicative, however, of but a few of the various ways in which the principles of various aspects may be employed and the described aspects are intended to include all such aspects and their equivalents

### BRIEF DESCRIPTION OF THE DRAWINGS

These and other sample aspects of the disclosure will be described in the detailed description that follow, and in the accompanying drawings, wherein:
FIG. 1 is a diagram of a wireless communications network configured in accordance with an aspect of the disclosure;
FIG. 2 is a wireless node that includes a front end network processing system in a wireless node in the wireless communications network of FIG. 1;
FIG. 3 is a block diagram of an apparatus that includes a processing system that uses the network processing system of FIG. 2;
FIG. 4 is a flow diagram illustrating an operation of an apparatus that operates under dual link speeds in accordance with one aspect of the disclosure;
FIG. 5 is a diagram illustrating a MAC encapsulation for a high speed radio link;
FIG. 6 is a block diagram of a first MAC layer data flow architecture; and
FIG. 7 is a block diagram illustrating the functionality of a wireless apparatus for implementing a robust transmission over two radio links in accordance with one aspect of the disclosure.
FIG. 8 is a block diagram of a second MAC layer data flow architecture; and
FIG. 9 is a block diagram illustrating the functionality of a wireless apparatus for implementing a robust reception over two radio links in accordance with one aspect of the disclosure.

In accordance with common practice, some of the drawings may be simplified for clarity. Thus, the drawings may not depict all of the components of a given apparatus (e.g., device) or method. Finally, like reference numerals may be used to denote like features throughout the specification and figures.

### DETAILED DESCRIPTION

Various aspects of methods and apparatus are described more fully hereinafter with reference to the accompanying drawings. These methods and apparatus may, however, be embodied in many different forms and should not be construed as limited to any specific structure or function presented throughout this disclosure. Rather, these aspects are provided so that this disclosure will be thorough and complete, and will fully convey the scope of these methods and apparatus to those skilled in the art. Based on the descriptions herein teachings herein one skilled in the art should appreciate that that the scope of the disclosure is intended to cover any aspect of the methods and apparatus disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure herein may be embodied by one or more elements of a claim.

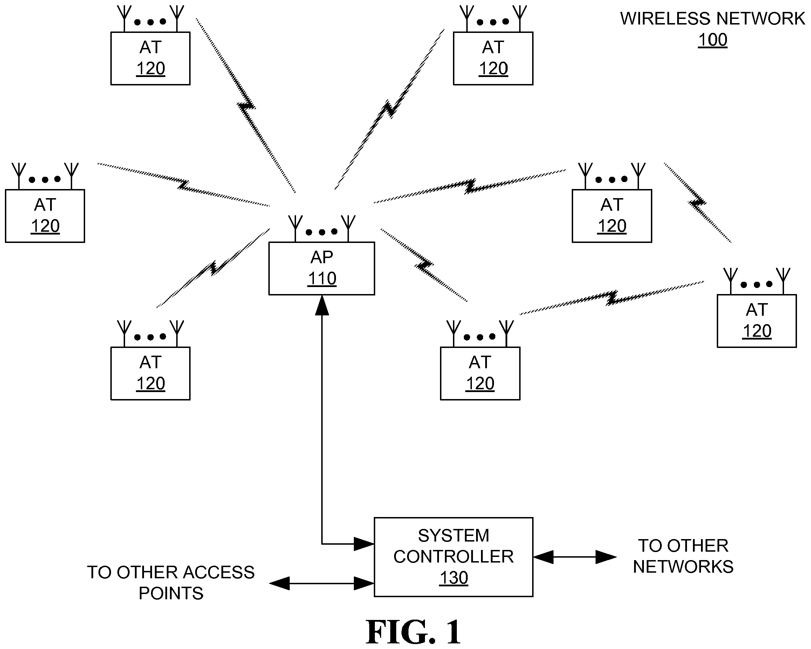

Several aspects of a wireless network will now be presented with reference to FIG. 1. The wireless network 100 is shown with several wireless nodes, generally designated as an access point 110 and a plurality of access terminals or stations (STAs) 120. Each wireless node is capable of receiving and/or transmitting. In the detailed description that follows, the term "access point" is used to designate a transmitting node and the term "access terminal" is used to designate a receiving node for downlink communications, whereas the term "access point" is used to designate a receiving node and the term "access terminal" is used to designate a transmitting node for uplink communications. However, those skilled in the art will readily understand that other terminology or nomenclature may be used for an access point and/or access terminal. By way of example, an access point may be referred to as a base station, a base transceiver station, a station, a terminal, a node, a wireless node, an access terminal acting as an access point, or some other suitable terminology. An access terminal may be referred to as a user terminal, a mobile station, a subscriber station, a station, a wireless device, a terminal, a node, a wireless node or some other suitable terminology. The various concepts described throughout this disclosure are intended to apply to all suitable wireless nodes regardless of their specific nomenclature.

The wireless network 100 may support any number of access points distributed throughout a geographic region to provide coverage for access terminals 120. A system controller 130 may be used to provide coordination and control of the access points, as well as access to other networks (e.g., Internet) for the access terminals 120. For simplicity, one access point 110 is shown. An access point is generally a fixed terminal that provides backhaul services to access terminals in the geographic region of coverage. However, the access point may be mobile in some applications. An access terminal, which may be fixed or mobile, utilizes the backhaul services of an access point or engages in peer-to-peer communications with other access terminals. Examples of access terminals include a telephone (e.g., cellular telephone), a laptop computer, a desktop computer, a Personal Digital Assistant (PDA), a digital audio player (e.g., MP3 player), a camera, a game console, or any other suitable wireless node.

The wireless network 100 may support MIMO technology. Using MIMO technology, an access point 110 may communicate with multiple access terminals 120 simultaneously using Spatial Division Multiple Access (SDMA). SDMA is a multiple access scheme which enables multiple streams transmitted to different receivers at the same time to share the same frequency channel and, as a result, provide higher user capacity. This is achieved by spatially precoding each data stream and then transmitting each spatially precoded stream through a different transmit antenna on the downlink. The spatially precoded data streams arrive at the access terminals with different spatial signatures, which enables each access terminal 120 to recover the data stream destined for that access terminal 120. On the uplink, each access terminal 120 transmits a spatially precoded data stream, which enables the access point 110 to identify the source of each spatially precoded data stream. It should be noted that although the term "precoding" is used herein, in general, the term "coding" may also be used to encompass the process of precoding, encoding, decoding and/or postcoding a data stream.

One or more access terminals 120 may be equipped with multiple antennas to enable certain functionality. With this configuration, for example, multiple antennas at the access point 110 may be used to communicate with a multiple antenna access point to improve data throughput without additional bandwidth or transmit power. This may be achieved by splitting a high data rate signal at the transmitter into multiple lower rate data streams with different spatial signatures, thus enabling the receiver to separate these streams into multiple channels and properly combine the streams to recover the high rate data signal.

While portions of the following disclosure will describe access terminals that also support MIMO technology, the access point 110 may also be configured to support access terminals that do not support MIMO technology. This approach may allow older versions of access terminals (i.e., "legacy" terminals) to remain deployed in a wireless network, extending their useful lifetime, while allowing newer MIMO access terminals to be introduced as appropriate.

In the detailed description that follows, various aspects of the disclosure will be described with reference to a MIMO system supporting any suitable wireless technology, such as Orthogonal Frequency Division Multiplexing (OFDM). OFDM is a spread-spectrum technique that distributes data over a number of subcarriers spaced apart at precise frequencies. The spacing provides "orthogonality" that enables a receiver to recover the data from the subcarriers. An OFDM system may implement IEEE 802.11, or some other air interface standard. Other suitable wireless technologies include, by way of example, Code Division Multiple Access (CDMA), Time Division Multiple Access (TDMA), or any other suitable wireless technology, or any combination of suitable wireless technologies. A CDMA system may implement IS-2000, IS-95, IS-856, Wideband-CDMA (WCDMA), or some other suitable air interface standard. A TDMA system may implement Global System for Mobile Communications (GSM) or some other suitable air interface standard. As those skilled in the art will readily appreciate, the various aspects of this disclosure are not limited to any particular wireless technology and/or air interface standard.

The wireless node, whether an access point or access terminal, may be implemented with a protocol that utilizes a layered structure that includes a physical (PHY) layer that implements all the physical and electrical specifications to interface the wireless node to the shared wireless channel, a Medium Access Control (MAC) layer that coordinates access to the shared wireless channel, and an application layer that performs various data processing functions including, by way of example, speech and multimedia codecs and graphics processing. Additional protocol layers (e.g., network layer, transport layer) may be required for any particular application. In some configurations, the wireless node may act as a relay point between an access point and access terminal, or two access terminals, and therefore, may not require an application layer. Those skilled in the art will be readily able to implement the appropriate protocol for any wireless node depending on the particular application and the overall design constraints imposed on the overall system.

When the wireless node in a transmit mode, the application layer processes data, segments the data into packets, and provides the data packets to the MAC layer. The MAC layer assembles MAC packets with each data packet from the application layer being carried by the payload of a MAC packet. Alternatively, the payload for a MAC packet may carry a fragment of a data packet or multiple data packets from the application layer. Each MAC packet includes a MAC header and an error detection code. The MAC packet is sometimes referred to as a MAC Protocol Data Unit (MPDU), but may also be referred to as a frame, packet, timeslot, segment, or any other suitable nomenclature.

When the MAC decides to transmit, it provides a block of MAC packets to the PHY layer. The PHY layer assembles a PHY packet by assembling the block of MAC packets into a payload and adding a preamble. As will be discussed in greater detail later, the PHY layer is also responsible for providing various signal processing functions (e.g., modulating, coding, spatial processing, etc.). The preamble, which is sometimes referred to as Physical Layer Convergence Protocol (PLCP), is used by the receiving node to detect the start of the PHY packet and synchronize to the transmitter's node data clock. The PHY packet is sometimes referred to as a Physical Layer Protocol Data Unit (PLPDU), but may also be referred to as a frame, packet, timeslot, segment, or any other suitable nomenclature.

When the wireless node is in a receive mode, the process is reversed. That is, the PHY layer detects an incoming PHY packet from the wireless channel. The preamble allows the PHY layer to lock in on the PHY packet and perform various signal processing functions (e.g., demodulating, decoding, spatial processing, etc.). Once processed, the PHY layer recovers the block of MAC packets carried in the payload of the PHY packet and provides the MAC packets to the MAC layer.

The MAC layer checks the error detection code for each MAC packet to determine whether it was successfully decoded. If the error detection code for a MAC packet indicates that it was successfully decoded, then the payload for the MAC packet is provided to the application layer. If the error detection code for a MAC packet indicates that it was unsuccessfully decoded, the MAC packet is discarded. A Block ACKnowledgement (BACK) may be sent back to the transmitting node indicating which data packets were successfully decoded. The transmitting node uses the BACK to determine which data packets, if any, require retransmission.

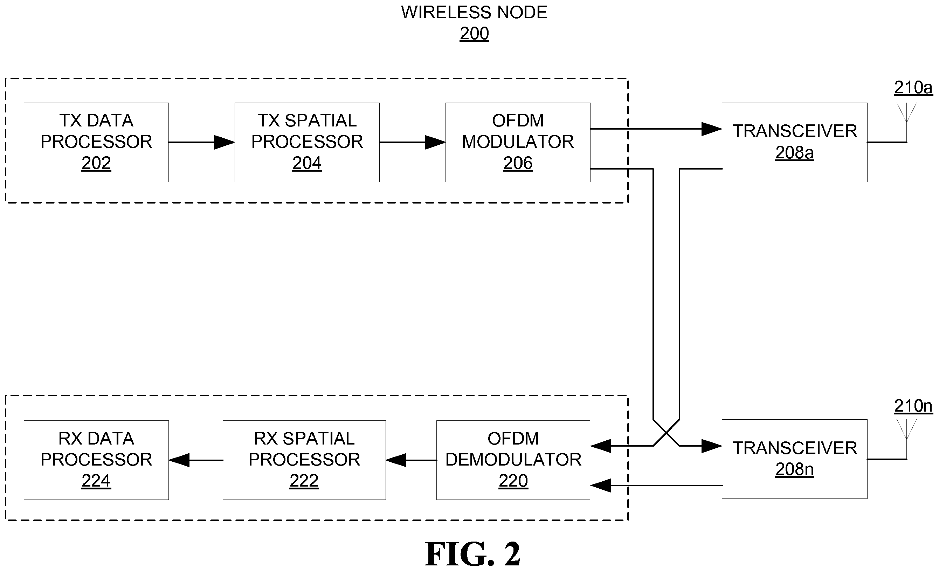

FIG. 2 is a conceptual block diagram illustrating an example of the signal processing functions of the PHY layer. In a transmit mode, a TX data processor 202 may be used to receive data from the MAC layer and encode (e.g., Turbo code) the data to facilitate Forward Error Correction (FEC) at the receiving node. The encoding process results in a sequence of code symbols that that may be blocked together and mapped to a signal constellation by the TX data processor 202 to produce a sequence of modulation symbols.

In wireless nodes implementing OFDM, the modulation symbols from the TX data processor 202 may be provided to an OFDM modulator 204. The OFDM modulator 204 splits the modulation symbols into parallel streams. Each stream is then mapped to an OFDM subcarrier and then combined using an Inverse Fast Fourier Transform (IFFT) to produce a TX spatial processor 204 that performs spatial processing of the modulation symbols. This may be accomplished by spatially precoding the modulation symbols before providing them to an OFDM modulator 206.

The OFDM modulator 206 splits the modulation symbols into parallel streams. Each stream is then mapped to an OFDM subcarrier and then combined together using an Inverse Fast Fourier Transform (IFFT) to produce a time domain OFDM stream. Each spatially precoded OFDM stream is then provided to a different antenna 210a-210n via a respective transceiver 208a-208n. Each transceiver 208a-208n modulates an RF carrier with a respective precoded stream for transmission over the wireless channel.

In a receive mode, each transceiver 208a-208n receives a signal through its respective antenna 210a-210n. Each transceiver 208a-208n may be used to recover the information modulated onto an RF carrier and provide the information to an OFDM demodulator 220.

The RX spatial processor 220 performs spatial processing on the information to recover any spatial streams destined for the wireless node 200. The spatial processing may be performed in accordance with Channel Correlation Matrix Inversion (CCMI), Minimum Mean Square Error (MMSE), Soft Interference Cancellation (SIC), or some other suitable technique. If multiple spatial streams are destined for the wireless node 200, they may be combined by the RX spatial processor 222.

In wireless nodes implementing OFDM, the stream (or combined stream) from the transceiver 208a-208n is provided to an OFDM demodulator 220. The OFDM demodulator 220 converts the stream (or combined stream) from time-domain to the frequency domain using a Fast Fourier Transform (FFT). The frequency domain signal comprises a separate stream for each subcarrier of the OFDM signal. The OFDM demodulator 220 recovers the data (i.e., modulation symbols) carried on each subcarrier and multiplexes the data into a stream of modulation symbols before sending the stream to a RX spatial processor 222.

The RX spatial processor 222 performs spatial processing on the information to recover any spatial streams destined for the wireless node 200. The spatial processing may be performed in accordance with Channel Correlation Matrix Inversion (CCMI), Minimum Mean Square Error (MMSE), Soft Interference Cancellation (SIC), or some other suitable technique. If multiple spatial streams are destined for the wireless node 200, they may be combined by the RX spatial processor 222.

A RX data processor 224 may be used to translate the modulation symbols back to the correct point in the signal constellation. Because of noise and other disturbances in the wireless channel, the modulation symbols may not correspond to an exact location of a point in the original signal constellation. The RX data processor 224 detects which modulation symbol was most likely transmitted by finding the smallest distance between the received point and the location of a valid symbol in the signal constellation. These soft decisions may be used, in the case of Turbo codes, for example, to compute a Log-Likelihood Ratio (LLR) of the code symbols associated with the given modulation symbols. The RX data processor 224 then uses the sequence of code symbol LLRs in order to decode the data that was originally transmitted before providing the data to the MAC layer.

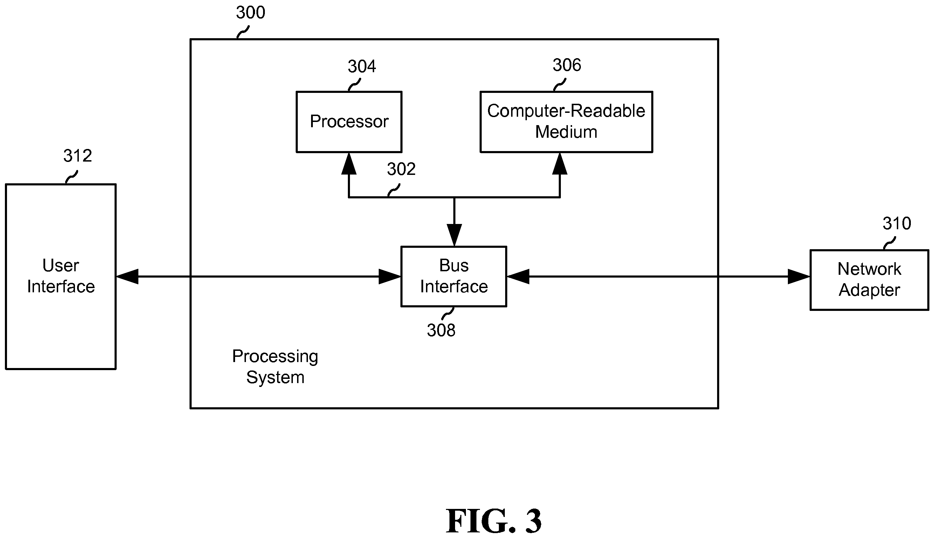

FIG. 3 illustrates an example of a hardware configuration for a processing system 300 in a wireless node. In this example, the processing system 300 may be implemented with a bus architecture represented generally by bus 302. The bus 302 may include any number of interconnecting buses and bridges depending on the specific application of the processing system 300 and the overall design constraints. The bus links together various circuits including a processor 304, computer-readable media 306, and a bus interface 308. The bus interface 308 may be used to connect a network adapter 310, among other things, to the processing system 300 via the bus 302. The network interface 310 may be used to implement the signal processing functions of the PHY layer. In the case of an access terminal 110 (see FIG. 1), a user interface 312 (e.g., keypad, display, mouse, joystick, etc.) may also be connected to the bus via the bus interface 308. The bus 302 may also link various other circuits such as timing sources, peripherals, voltage regulators, power management circuits, and the like, which are well known in the art, and therefore, will not be described any further.

The processor 304 is responsible for managing the bus and general processing, including the execution of software stored on the computer-readable media 308. The processor 308 may be implemented with one or more general-purpose and/or special-purpose processors. Examples include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

In the hardware implementation illustrated in FIG. 3, the computer-readable media 306 is shown as part of the processing system 300 separate from the processor 304. However, as those skilled in the art will readily appreciate, the computer-readable media 306, or any portion thereof, may be external to the processing system 300. By way of example, the computer-readable media 306 may include a transmission line, a carrier wave modulated by data, and/or a computer product separate from the wireless node, all which may be accessed by the processor 304 through the bus interface 308. Alternatively, or in addition to, the computer readable media 304, or any portion thereof, may be integrated into the processor 304, such as the case may be with cache and/or general register files.

Given IEEE 802.11 devices that are capable of communicating over a lower speed link, such as a 2.4/5 GHz radio link, and a higher speed link, such as a 60 GHz radio link, suffering degradation on the PHY layer connectivity at 60GHz is more likely at 2.4/5GHz. To improve communication robustness, the system disclosed herein is capable of preserving a connection over the lower speed link when the higher speed link drops. In one aspect of the disclosure, a MAC architecture allows the 2.4/5GHz link to provide a robust backup to the 60GHz link and therefor allow preservation of an application connection during failures on the 60GHz link. By way of example, a TCP connection can be preserved based on the robustness. By way of another example, a video stream can continue to be maintained, albeit at lower quality.

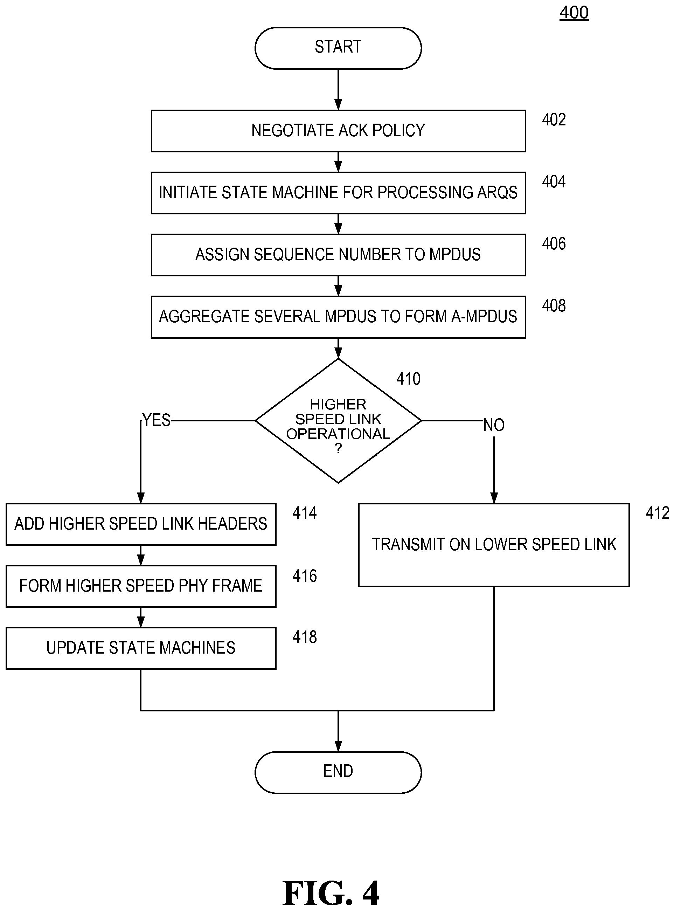

FIG. 4 illustrates a scheme 400 of an apparatus that operates under dual link speeds in accordance with one aspect of the disclosure.

In step 402, prior to traffic transmission between two STAs, the STAs negotiate a Block ACK policy for the lower speed radio link. For example, an STA 1 and an STA 2, STA 1 and STA 2 negotiate the Block Acknowledgement (BA) policy for the lower speed link, such as the 2.4/5 GHz radio link, operation.

In step 404, state machines required to process 802.11 ARQs are started at the transmit and receive sides.

In step 406, every MPDU is provided a sequence number according to 802.11n MAC operation.

In step 408, several MPDUs are aggregated to form A-MPDUs.

In step 410, it is determined whether the higher speed link such as the 60 GHz link is available. If so, operation continues with step 414, where the MAC packets are transmitted using the 60 GHz radio link, as further described below. Otherwise, if the 60 GHz link is not available, then operation will continue with in step 412, where the MAC packets are transmitted using the lower speed link such as the 2.4/5 GHz link, as described below.

In step 412, if it is determined that the higher speed link such as the 60 GHz PHY is not available in step 410, then the MAC layer begins transport of A-MPDUs on the lower speed link, such as the 2.4/5 GHz PHY. In one aspect of the disclosure, there are no requirements for a MAC layer connection set up for the transition, and no messages need to be communicated to indicate a transition between the higher speed and lower speed physical layers. When 60GHz link improves, packets can continue on the 60GHz radio link.

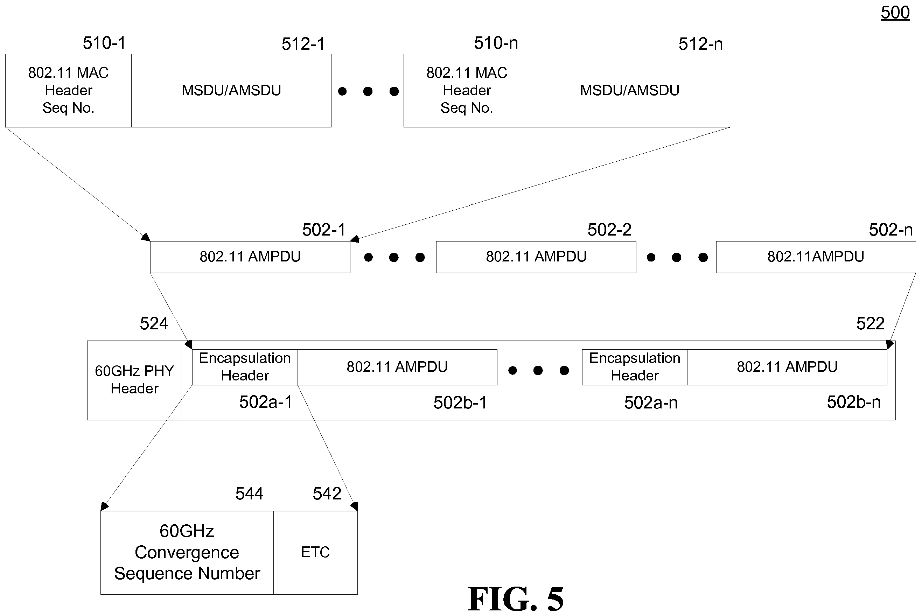

Referring back to step 410 and further referring to FIG. 5, where the higher speed link is available, operation will proceed to step 414, with several A-MPDUs 502-1 to 502-n being sent to an encapsulation portion 522. In the encapsulation portion 522, additional respective 60GHz convergence layer headers 502a-1 to 502a-n are added to A-MPDUs 502b-1 to 502b-n. In one aspect of the disclosure, each 60 GHz convergence layer header includes a separate sequence number 544.

In step 416, a 60GHz PSDU is formed from several such A-MPDUs.

In step 418, the transmit and receive side 802.11 MAC ARQ states are updated to account for acknowledged A-MPDUs sent on the 60 GHz PHY

Several strategies might be utilized to ensure that the ARQ window size does not limit the size of the transmitted 60GHz PSDU. For example, with IEEE 802.11n, the ARQ window size is restricted to 64 MPDUs since the BA only carries a 64 bit bitmap. The bitmap stores the transmission state information.
1. In 802.11, A-MSDU may be used to aggregate several MSDUs from the higher layers. Each A-MSDU is assigned a sequence number. Note that A-MSDUs can be up to 8000 bytes long. Therefore a single block ACK can acknowledge an aggregate that is 64 x 8000 bytes long.
2. Maintain loose BA state information. The transmitter sides updates the last in sequence received and a bitmap based on the transmissions on the 60 GHz link. Transmissions on the 60GHz link are allowed to proceed beyond the current ARQ window. As soon as the 60 GHz link fails, several options are possible.
   a. The transmitter begins transmissions on the 5GHz link based on the current known Block ACK state. The receiver responds the data with a BA that can acknowledge MPDUs that were received previously on the 60GHz link. Based on the BAs received the transmitter can skip ahead to sequence numbers beyond the current ARQ window.
   b. The transmitter begins by sending a BAR (block ACK request) based on the current known BA state. Based on the response to the BAR, the transmitter updates the window. Note that in some cases several BAR may need to be sent before, the transmitter can determine which sequence number s needs to be retransmitted.

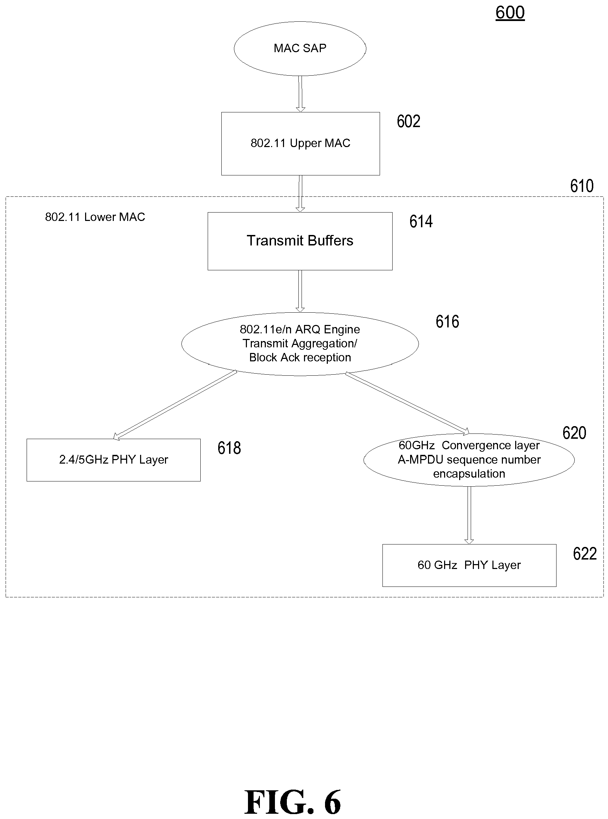

FIG. 6, which illustrates a data flow 600 in an architecture configured in accordance with one aspect of the disclosure, includes an IEEE 802.11 upper MAC portion 602. The upper MAC portion 602 is coupled to an IEEE 802.11 lower MAC and PHY portion 610. The lower MAC and PHY portion 610 includes transmit buffers 614 that are used to supply an IEEE 802.11e/n ARQ engine 616. The engine 616 also performs transmit aggregation for data that is to be transmitted. In one aspect of the disclosure, data may be transmitted via two PHY layers. One PHY portion, comprised of a 2.4/5GHz PHY layer 618, is used to transmit data on a 2.4/5GHz radio link. Another PHY portion, comprised of a 60GHz convergence layer 620 and a 60GHz layer 622, is used to assemble and transmit data packets on a 60GHz higher-speed radio link. On the receiver side, the engine 616 also performs block ACK reception for data that is received on the 2.4/5GHz and 60GHz radio links in accordance with the approach disclosed above.

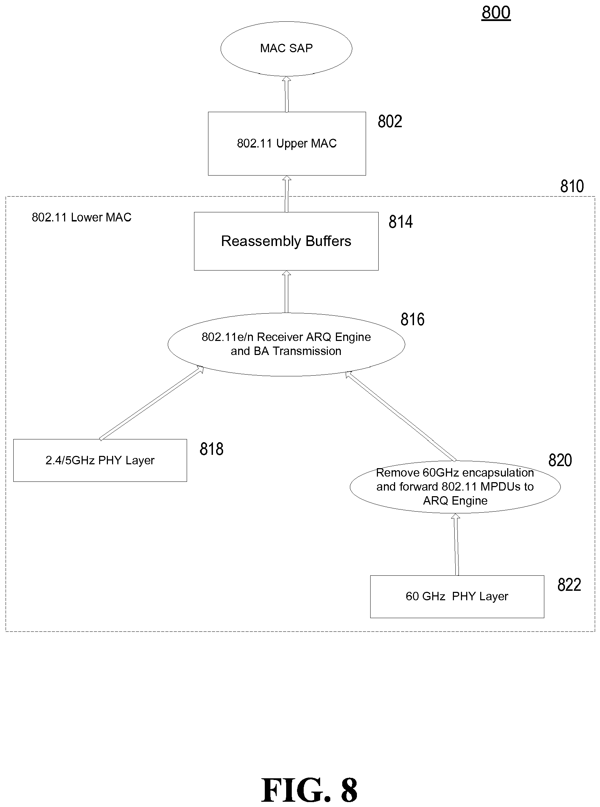

FIG. 8, which illustrates a second data flow 800 in an architecture configured in accordance with one aspect of the disclosure, that describes a process for receiving packets from the 2.4/5GHz and 60GHz radio links. Similar to the description in FIG. 6, above, the architecture includes an IEEE 802.11 upper MAC portion 802. The upper MAC portion 802 is coupled to an IEEE 802.11 lower MAC and PHY portion 810. The lower MAC and PHY portion 810 includes reassembly buffers 814 that are supplied by an IEEE 802.11e/n receiver ARQ and BA transmission engine 816. The engine 816 performs ARQ and BA transmission for data that is received on the 2.4/5GHz and 60GHz radio links in accordance with transmissions based on the approach disclosed above. The engine 816 also performs receive aggregation for data that is received. In one aspect of the disclosure, in a reverse direction to the data flow noted above, data may be received via two PHY layers. One PHY portion, comprised of a 2.4/5GHz PHY layer 818, is used to receive data on a 2.4/5GHz radio link. Another PHY portion, comprised of a 60GHz convergence layer 820 and a 60GHz layer 822, is used to receive and assemble data packets on a 60GHz higher-speed radio link.

The processing system described herein, or any part of the processing system, may provide the means for performing the functions recited herein. By way of example, the processing system executing code may provide the means for generating an index for a plurality of packets for use in a first radio link; means for transmitting the plurality of packets using a second radio link; determining transmission state information indicating whether each packet in the plurality of packets have been received; and means for transmitting additional packets based on the index and the transmission state information. By way of another example, the processing system executing code may provide the means for contending for access to a medium based on a request, by an apparatus, with a plurality of other apparatuses; receiving a message, the message comprising a resource allocation based on requests from the apparatus and the other apparatuses, wherein the resource allocation permits data transmission from the apparatus and some of the other apparatuses; and transmitting data by the apparatus based on the message. Alternatively, the code on the computer-readable medium may provide the means for performing the functions recited herein.

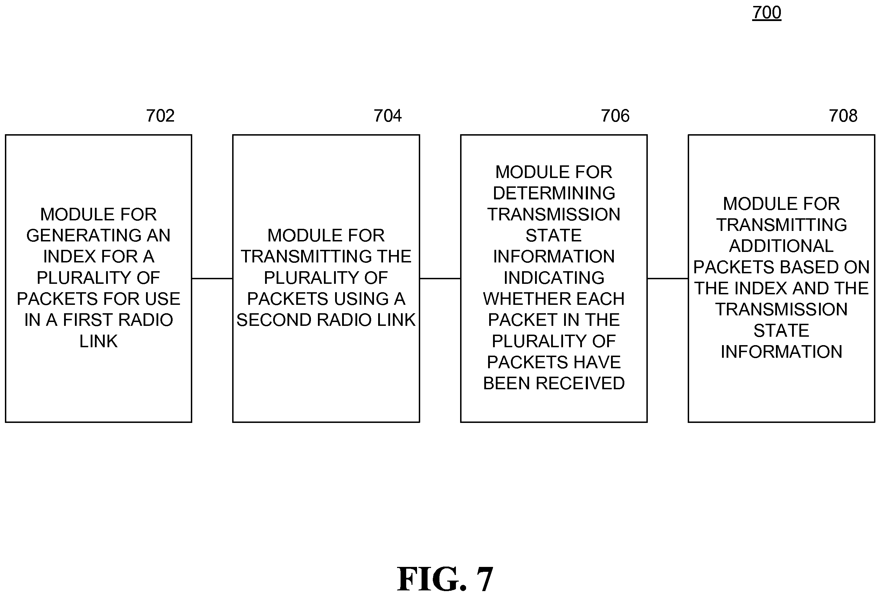

FIG. 7 is a diagram illustrating the functionality of an apparatus 700 in accordance with one aspect of the disclosure. The apparatus 700 includes a module 702 for generating an index for a plurality of packets for use in a first radio link for transmission to another apparatus; a module 704 for transmitting the plurality of packets using a second radio link to the other apparatus; a module 706 for determining transmission state information indicating whether each packet in the plurality of packets have been received by the other apparatus; and a module 708 for transmitting additional packets based on the index and the transmission state information.

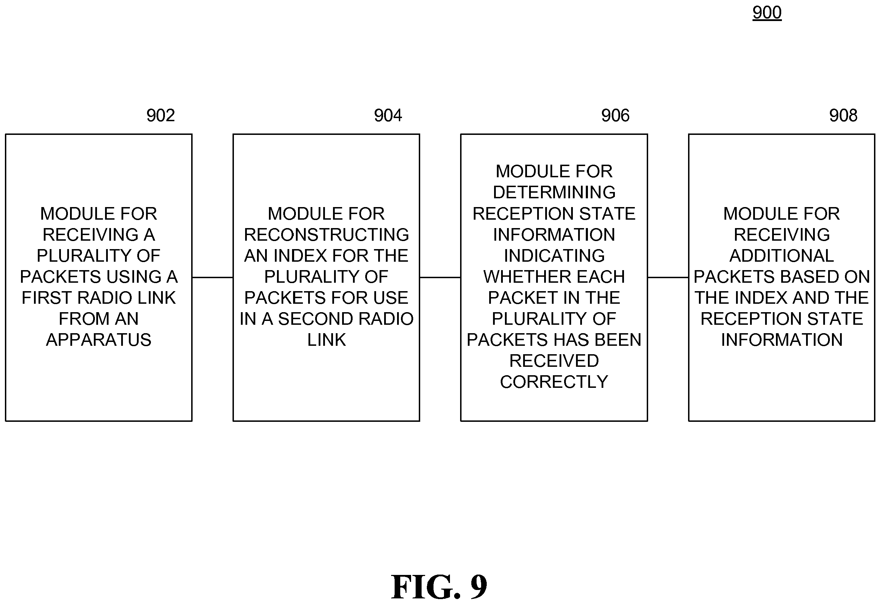

FIG. 9 is a diagram illustrating the functionality of an apparatus 900 in accordance with one aspect of the disclosure. The apparatus 900 includes a module 902 for receiving a plurality of packets using a first radio link from an apparatus; a module 904 for reconstructing an index for the plurality of packets for use in a second radio link; a module 906 for determining reception state information indicating whether each packet in the plurality of packets has been received correctly; and a module 908 for receiving additional packets based on the index and the reception state information.

It is understood that any specific order or hierarchy of steps described in the context of a software module is being presented to provide an examples of a wireless node. Based upon design preferences, it is understood that the specific order or hierarchy of steps may be rearranged while remaining within the scope of the disclosure.

Those skilled in the art will recognize how best to implement the described functionality presented throughout this disclosure depending on the particular application and the overall design constraints imposed on the overall system.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The previous description is provided to enable any person skilled in the art to fully understand the full scope of the disclosure. Modifications to the various configurations disclosed herein will be readily apparent to those skilled in the art. Thus, the claims are not intended to be limited to the various aspects of the disclosure described herein, but is to be accorded the full scope consistent with the language of claims, wherein reference to an element in the singular is not intended to mean "one and only one" unless specifically so stated, but rather "one or more." Unless specifically stated otherwise, the term "some" refers to one or more. A claim that recites at least one of a combination of elements (e.g., "at least one of A, B, or C") refers to one or more of the recited elements (e.g., A, or B, or C, or any combination thereof). All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## Claims

1. A method for wireless communications comprising:
generating an index for a plurality of packets for use in a lower-speed radio link for transmission to an apparatus, wherein the apparatus is adapted to operate under dual speed links, namely a higher-speed and the lower-speed radio link;
transmitting the plurality of packets encapsulated in the higher-speed radio link to the apparatus upon determination that the higher-speed radio link is available;
determining transmission state information indicating whether each packet in the plurality of packets has been received by the apparatus; and
transmitting additional packets based on the index and the transmission state information.

2. The method of claim 1, wherein the index is based on a transmission size of the lower-speed radio link.

3. The method of claim 1, wherein the transmission of the plurality of packets using the higher-speed radio link comprises aggregating the plurality of packets to form a single higher-speed radio link frame; and/or
wherein the transmission of the plurality of packets using the higher-speed radio link comprises encapsulating the plurality of packets according to a higher-speed radio link protocol.

4. The method of claim 1, wherein the transmission state information of the plurality of packets is stored at a MAC layer associated with the lower-speed radio link; and preferably
wherein the MAC layer is associated with the higher-speed radio link.

5. The method of claim 1, wherein the transmission state information of the plurality of packets comprises a bitmap comprising a plurality of bits, wherein each bit is associated with a transmission state of a respective packet in the plurality of packets.

6. The method of claim 1, wherein the determining transmission state information comprises detecting an absence of receipt of the transmission state information within a period of time; and/or wherein the determining transmission state information comprises detecting that the transmission state information indicates a number of failed transmissions of the plurality of packets above a threshold; and/or wherein the determining transmission state information comprises receiving the transmission state information from the lower-speed radio link.

7. The method of claim 1, wherein each of the additional packets comprise one or more packets of the plurality of packets.

8. The method of claim 1, further comprising updating a back-off counter for access to the lower-speed radio link based on the transmission of the plurality of packets using the higher-speed radio link; and preferably
wherein the plurality of packets comprise data associated with a class and the update of the back-off counter is based on the class; and/or the determining transmission state information comprises using a residual of the back-off counter to determine a time of the transmission of additional packets.

9. The method of claim 1, wherein the determination of transmission state information comprises using a request for transmission state information message to update the transmission state information; and wherein the transmission of additional packets comprises continuing transmission based on the updated transmission state information.

10. The method of claim 1, wherein the transmission of the additional packets comprise transmitting the additional packets using the lower-speed radio link; and/or
wherein the transmission of the additional packets is based on at least one of a defined time period, a SNR value, or a SINR value.

11. The method of claim 1, wherein the transmission of the additional packets comprises:
performing a rate adaption process; and
transmitting the additional packets to the apparatus using the lower-speed radio link based on the rate adaption process.

12. The method of claim 1, further comprising maintaining multiple ARQ states for blocks of packets that are transmitted in the higher-speed radio link, wherein a sequence number of packets in the blocks of packets is beyond a current ARQ window size according to the lower-speed radio link.

13. The method of claim 1, wherein the lower-speed radio link comprises an ARQ window size and an ARQ state, the method further comprises:
transmitting blocks of packets, whose sequence number is beyond the ARQ window size, using the higher-speed radio link; and
updating the ARQ state based on confirmed correct reception of the blocks of packets in the higher-speed radio link; and preferably
further comprising retransmitting dropped packets based on the updated ARQ state; and preferably
wherein any retransmissions are carried out using the lower-speed radio link.

14. A apparatus for wireless communications comprising:
means for generating an index for a plurality of packets for use in a lower-speed radio link for transmission to another apparatus, wherein the apparatus is adapted to operate under dual speed links, namely a higher-speed and the lower-speed radio link;
means for transmitting the plurality of packets encapsulated in the higher-speed radio link to the other apparatus upon determination that the higher-speed radio link is available;
means for determining transmission state information indicating whether each packet in the plurality of packets has been received by the other apparatus; and
means for transmitting additional packets based on the index and the transmission state information.

15. A computer-program product for wireless communications, comprising:
a machine-readable medium comprising instructions executable to perform the method of claim 1 when said program is run on a computer.

## Patentansprüche

1. Verfahren für Drahtloskommunikationen, das Folgendes aufweist:
Erzeugen eines Index für eine Vielzahl von Paketen zur Verwendung bei einer Funkverbindung mit langsamerer Geschwindigkeit zur Übertragung an eine Vorrichtung, wobei die Vorrichtung ausgelegt ist, um Verbindungen mit zwei Geschwindigkeiten zu betreiben, und zwar eine Funkverbindung mit höherer Geschwindigkeit und die Funkverbindung mit niedrigerer Geschwindigkeit;
Übertragen der Vielzahl von Paketen, die in der Funkverbindung mit höherer Geschwindigkeit eingekapselt sind, an die Vorrichtung bei Bestimmung, dass die Funkverbindung mit höherer Geschwindigkeit verfügbar ist;
Bestimmen der Übertragungszustandsinformation, die anzeigt ob jedes Paket in der Vielzahl von Paketen durch die Vorrichtung empfangen worden ist; und
Übertragen zusätzlicher Pakete basierend auf dem Index und der Übertragungszustandsinformation.

2. Verfahren gemäß Anspruch 1, wobei der Index auf einer Übertragungsgröße der Funkverbindung mit niedrigerer Geschwindigkeit basiert.

3. Verfahren gemäß Anspruch 1, wobei die Übertragung der Vielzahl von Paketen unter Verwendung der Funkverbindung mit höherer Geschwindigkeit das Aggregieren der Vielzahl von Paketen aufweist, um einen einzelnen Funkverbindungsrahmen mit höherer Geschwindigkeit zu bilden; und/oder wobei die Übertragung der Vielzahl von Paketen unter Verwendung der Funkverbindung mit höherer Geschwindigkeit das Einkapseln der Vielzahl von Paketen gemäß einem Protokoll für Funkverbindungen mit höherer Geschwindigkeit aufweist.

4. Verfahren gemäß Anspruch 1, wobei die Übertragungszustandsinformation der Vielzahl von Paketen in einer MAC-Schicht gespeichert ist, die mit der Funkverbindung mit niedrigerer Geschwindigkeit assoziiert ist; und
wobei vorzugsweise die MAC-Schicht mit der Funkverbindung mit höherer Geschwindigkeit assoziiert ist.

5. Verfahren gemäß Anspruch 1, wobei die Übertragungszustandsinformation der Vielzahl von Paketen eine Bitmap aufweist, die eine Vielzahl von Bits aufweist, wobei jedes Bit mit einem Übertragungszustand eines entsprechenden Pakets in der Vielzahl von Paketen assoziiert ist.

6. Verfahren gemäß Anspruch 1, wobei das Bestimmen der Übertragungszustandsinformation das Detektieren einer Abwesenheit des Empfangs der Übertragungszustandsinformation innerhalb einer Zeitperiode aufweist; und/oder
wobei die Bestimmung der Übertragungszustandsinformation das Detektieren aufweist, dass die Übertragungszustandsinformation eine Anzahl von fehlgeschlagenen Übertragungen der Vielzahl von Paketen oberhalb eines Schwellenwerts anzeigt; und/oder
wobei die Übertragungszustandsinformation das Empfangen der Übertragungszustandsinformation von der Funkverbindung mit niedrigerer Geschwindigkeit aufweist.

7. Verfahren gemäß Anspruch 1, wobei jedes der zusätzlichen Pakete eines oder mehrere Pakete der Vielzahl von Paketen aufweist.

8. Verfahren gemäß Anspruch 1, das ferner das Aktualisieren eines Back-off-Zählelements aufweist, um auf die Funkverbindung mit niedrigerer Geschwindigkeit basierend auf der Übertragung der Vielzahl von Paketen unter Verwendung der Funkverbindung mit höherer Geschwindigkeit zuzugreifen; und
wobei vorzugsweise die Vielzahl von Paketen Daten aufweist, die mit einer Klasse assoziiert sind, und die Aktualisierung des Back-off-Zählelements auf der Klasse basiert;
und/oder die Bestimmung der Übertragungszustandsinformation die Verwendung eines Residuums des Back-off-Zählelements aufweist, um eine Zeit der Übertragung zusätzlicher Pakete zu bestimmen.

9. Verfahren gemäß Anspruch 1, wobei die Bestimmung der Übertragungszustandsinformation unter Verwendung einer Anfrage für eine Übertragungszustandsinformationsnachricht zur Aktualisierung der Übertragungszustandsinformation aufweist; und wobei die Übertragung zusätzlicher Pakete die kontinuierliche Übertragung basierend auf der aktualisierten Übertragungszustandsinformation aufweist.

10. Verfahren gemäß Anspruch 1, wobei die Übertragung der zusätzlichen Pakete das Übertragen der zusätzlichen Pakete unter Verwendung der Funkverbindung mit niedrigerer Geschwindigkeit aufweist; und/oder wobei die Übertragung der zusätzlichen Pakete auf einer definierten Zeitperiode und/oder einem SRV-Wert und/oder einem SIRV-Wert basiert.

11. Verfahren gemäß Anspruch 1, wobei die Übertragung der zusätzlichen Pakete Folgendes aufweist:
Ausführen eines Ratenanpassungsprozesses; und
Übertragen der zusätzlichen Pakete an die Vorrichtung unter Verwendung der Funkverbindung mit niedrigerer Geschwindigkeit basierend auf dem Ratenanpassungsprozess.

12. Verfahren gemäß Anspruch 1, das ferner das Aufrechterhalten mehrerer automatischer Wiederholungsanfrage- bzw. ARQ-Zustände (ARQ = Automatic Repeat Request) für Paketblöcke, die in der Funkverbindung mit höherer Geschwindigkeit übertragen werden, wobei eine Sequenzanzahl von Paketen in den Paketblöcken außerhalb einer aktuellen ARQ-Fenstergröße gemäß der Funkverbindung mit niedrigerer Geschwindigkeit ist.

13. Verfahren gemäß Anspruch 1, wobei die Funkverbindung mit niedrigerer Geschwindigkeit eine ARQ-Fenstergröße und einen ARQ-Zustand aufweist, wobei das Verfahren ferner Folgendes aufweist:
Übertragen von Paketblöcken, deren Sequenzanzahl außerhalb der ARQ-Fenstergröße ist, unter Verwendung der Funkverbindung mit höherer Geschwindigkeit; und
Aktualisieren des ARQ-Zustands basierend auf dem bestätigten, korrekten Empfang der Paketblöcke in der Funkverbindung mit höherer Geschwindigkeit; und
das vorzugsweise ferner das Neuübertragen fallengelassener Pakete basierend auf dem aktualisierten ARQ-Zustand aufweist; und
wobei vorzugsweise jegliche Neuübertragung unter Verwendung der Funkverbindung mit niedrigerer Geschwindigkeit ausgeführt wird.

14. Vorrichtung für Drahtloskommunikationen, die Folgendes aufweist:
Mittel zum Erzeugen eines Index für eine Vielzahl von Paketen zur Verwendung in einer Funkverbindung mit niedrigerer Geschwindigkeit zur Übertragung an eine andere Vorrichtung, wobei die Vorrichtung ausgelegt ist, um mit Verbindungen mit zwei Geschwindigkeiten zu arbeiten, und zwar einer Funkverbindung mit höherer Geschwindigkeit und der Funkverbindung mit niedrigerer Geschwindigkeit;
Mittel zum Übertragen der Vielzahl von Paketen, die in der Funkverbindung mit höherer Geschwindigkeit eingekapselt sind, an die andere Vorrichtung bei Bestimmung, dass die Funkverbindung mit höherer Geschwindigkeit verfügbar ist;
Mittel zum Bestimmen der Übertragungszustandsinformation, die anzeigt, ob jedes Paket in der Vielzahl von Paketen durch die andere Vorrichtung empfangen worden ist; und
Mittel zum Übertragen zusätzlicher Pakete basierend auf dem Index und der Übertragungszustandsinformation.

15. Computerprogrammprodukt für Drahtloskommunikationen, das Folgendes aufweist:
ein maschinenlesbares Medium, das Instruktionen aufweist, die ausführbar sind zum Durchführen des Verfahrens gemäß Anspruch 1, wenn das Programm auf einem Computer läuft.

## Revendications

1. Procédé de communication sans fil, comprenant :
générer un index pour une pluralité de paquets pour utilisation dans une liaison radio à vitesse inférieure pour émission vers un dispositif, le dispositif étant adapté à fonctionner sous des liaisons à double vitesse, à savoir une liaison radio à une vitesse supérieure et à la vitesse inférieure ;
émettre la pluralité de paquets encapsulés dans la liaison radio à vitesse supérieure vers le dispositif lorsqu'il est déterminé que la liaison radio à vitesse supérieure est disponible ;
déterminer des informations d'état de transmission indiquant si chaque paquet de la pluralité de paquets a été reçu par le dispositif ; et
émettre des paquets additionnels sur la base de l'index et des informations d'état de transmission.

2. Procédé selon la revendication 1, dans lequel l'index est basé sur une taille de transmission de la liaison radio à vitesse inférieure.

3. Procédé selon la revendication 1, dans lequel l'émission de la pluralité de paquets en utilisant la liaison radio à vitesse supérieure comprend l'agrégation de la pluralité de paquets pour former une seule trame de liaison radio à vitesse supérieure ; et/ou
dans lequel l'émission de la pluralité de paquets en utilisant la liaison radio à vitesse supérieure comprend l'encapsulation de la pluralité de paquets selon un protocole de liaison radio à vitesse supérieure.

4. Procédé selon la revendication 1, dans lequel les informations d'état de transmission de la pluralité de paquets sont mémorisées au niveau d'une couche MAC associée à la liaison radio à vitesse inférieure ; et de préférence
dans lequel la couche MAC est associée à la liaison radio à vitesse supérieure.

5. Procédé selon la revendication 1, dans lequel les informations d'état de transmission de la pluralité de paquets comprennent un réseau de bits comprenant une pluralité de bits, dans lequel chaque bit est associé à un état de transmission d'un paquet respectif de la pluralité de paquets.

6. Procédé selon la revendication 1, dans lequel la détermination d'informations d'état de transmission comprend la détection d'une absence de réception des informations d'état de transmission dans une période de temps ; et/ou
dans lequel la détermination d'informations d'état de transmission comprend la détection que les informations d'état de transmission indiquent qu'un nombre de transmissions échouées de la pluralité de paquets est au-dessus d'un seuil ; et/ou dans lequel la détermination des informations d'état de transmission comprend la réception des informations d'état de transmission à partir de la liaison radio à vitesse inférieure.

7. Procédé selon la revendication 1, dans lequel chacun des paquets additionnels comprend un ou plusieurs paquets de la pluralité de paquets.

8. Procédé selon la revendication 1, comprenant en outre la mise à jour d'un compteur de retrait pour accéder à la liaison radio à vitesse inférieure sur la base de l'émission de la pluralité de paquets en utilisant la liaison radio à vitesse supérieure ; et de préférence
dans lequel la pluralité de paquets comprend des données associées à une classe et la mise à jour du compteur de retrait est basée sur la classe ; et/ou la détermination d'informations d'état de transmission comprend l'utilisation d'un résidu du compteur de retrait pour déterminer un temps pour la transmission de paquets additionnels.

9. Procédé selon la revendication 1, dans lequel la détermination d'informations d'état de transmission comprend l'utilisation d'une requête d'un message d'informations d'état de transmission pour mettre à jour les informations d'état de transmission ; et dans lequel l'émission de paquets additionnels comprend de continuer l'émission sur la base des informations d'état de transmission mises à jour.

10. Procédé selon la revendication 1, dans lequel l'émission des paquets additionnels comprend l'émission des paquets additionnels en utilisant la liaison radio à vitesse inférieure ; et/ou
dans lequel l'émission des paquets additionnels est basée sur au moins l'une d'une période de temps définie, d'une valeur de SNR ou d'une valeur de SINR.

11. Procédé selon la revendication 1, dans lequel l'émission des paquets additionnels comprend :
réaliser un processus d'adaptation de débit ; et
émettre les paquets additionnels vers le dispositif en utilisant la liaison radio à vitesse inférieure sur la base du processus d'adaptation de débit.

12. Procédé selon la revendication 1, comprenant en outre le maintien de multiples états ARQ pour des blocs de paquets qui sont émis dans la liaison radio à vitesse supérieure, dans lequel un numéro de séquence de paquets dans les blocs de paquets est au-delà d'une taille de fenêtre ARQ courante conformément à la liaison radio à vitesse inférieure.

13. Procédé selon la revendication 1, dans lequel la liaison radio à vitesse inférieure comprend une taille de fenêtre ARQ et un état ARQ, le procédé comprenant en outre :
émettre des blocs de paquets dont le numéro de séquence est au-delà de la taille de fenêtre ARQ, en utilisant la liaison radio à vitesse supérieure ; et
mettre à jour l'état ARQ sur la base d'une réception correcte confirmée des blocs de paquets dans la liaison radio à vitesse supérieure ; et de préférence
comprenant en outre la réémission de paquets perdus sur la base de l'état ARQ mis à jour ; et de préférence
dans lequel toutes les réémissions sont réalisées en utilisant la liaison radio à vitesse inférieure.

14. Dispositif de communication sans fil comprenant :
des moyens pour générer un index pour une pluralité de paquets pour utilisation dans une liaison radio à vitesse inférieure pour émission vers un autre dispositif, le dispositif étant adapté à fonctionner sous des liaisons à double vitesse, à savoir une liaison radio à une vitesse supérieure et à la vitesse inférieure ;
des moyens pour émettre la pluralité de paquets encapsulés dans la liaison radio à vitesse supérieure vers l'autre dispositif lorsqu'il est déterminé que la liaison radio à vitesse supérieure est disponible ;
des moyens pour déterminer des informations d'état de transmission indiquant si chaque paquet de la pluralité de paquets a été reçu par l'autre dispositif ; et
des moyens pour émettre des paquets additionnels sur la base de l'index et des informations d'état de transmission.

15. Produit programme informatique de communication sans fil, comprenant :
un support lisible par une machine comprenant des instructions exécutables pour réaliser le procédé de la revendication 1 lorsque le programme est exécuté sur un ordinateur.
